Europäisches Patentamt

(19) European Patent Office

Office européen des brevets

(11) Publication number: **0 388 970**
**A2**

## (12) EUROPEAN PATENT APPLICATION

(21) Application number: **90105538.4**

(22) Date of filing: **23.03.90**

(51) Int. Cl.⁵: **C08L 81/02, C08L 81/06**

(30) Priority: **23.03.89 US 327750**

(43) Date of publication of application:
**26.09.90 Bulletin 90/39**

(84) Designated Contracting States:
**AT BE CH DE ES FR GB GR IT LI LU NL SE**

(71) Applicant: **PHILLIPS PETROLEUM COMPANY**
**5th and Keeler**
**Bartlesville Oklahoma 74004(US)**

(72) Inventor: **Wright, Roy, Franklin**
**2076 Southview**
**Bartlesville, OK 74003(US)**
Inventor: **Houser, Charles Daniel**
**RR 1 Box 269**
**Copan, OK 74022(US)**

(74) Representative: **Geissler, Bernhard, Dr.jur.,**
**Dipl.-Phys. et al**
**Patent- u. Rechtsanwälte Bardehle**
**-Pagenberg-Dost-Altenburg**
**-Frohwitter-Geissler & Partner Postfach 86 06**
**20 Galileiplatz 1**
**D-8000 München 80(DE)**

(54) **Thermoplastic resin compositions and methods.**

(57) The present invention provides thermoplastic resin molding compositions which require reduced mold cycle time, result in reduced mold shrinkage and when molded result in products having improved mechanical properties. Methods of preparing the compositions, methods of producing molded products using the compositions and the molded products so produced are also provided. The compositions are comprised of a mixture of poly(arylene sulfide) resin and poly(aromatic sulfide/sulfone) resin.

EP 0 388 970 A2

# THERMOPLASTIC RESIN COMPOSITIONS AND METHODS

## Background Of The Invention

### 1. Field Of The Invention

The present invention relates to thermoplastic resin compositions containing poly(arylene sulfide) and poly(aromatic sulfide/sulfone) and methods of preparing and using such compositions to form molded products having improved mechanical properties.

### 2. Description of the Prior Art

Poly(arylene sulfide) resin has achieved wide acceptance as an injection moldable plastic having outstanding chemical, heat and electrical insulation resistance as well as superior rigidity compared to other engineering plastics. However, poly(arylene sulfide) exhibits a tendency towards excessive mold cycle times and excessive mold shrinkage. Another problem frequently associated with poly(arylene sulfide) has been its poor toughness, characterized by low mechanical properties including impact strength and elongation compared to other engineering plastics.

A number of methods for improving the moldability of poly(arylene sulfide) resin as well as for increasing the strength of molded articles produced therefrom have been proposed which have achieved varying degrees of success. Fillers such as glass reinforcement material have been incorporated in the resin to improve impact strength and a number of other additives such as flexible polymers, coupling agents and the like have been included in the resin composition to improve performance and properties.

Blends of poly(arylene sulfide) with other polymers have produced improved molding and mechanical properties. For example, Great Britian Patent No. 1,485,523 published Sept. 14, 1977 discloses blends of poly(phenylene sulfide), aromatic polysulfone and fluorocarbon polymers which are suitable for producing low friction coatings on substrates. United States Patent No. 4,528,346 issued July 9, 1985 discloses blends of poly(phenylene sulfide), polysulfone and an epoxy resin. United States Patent No. 4,734,470 issued Mar. 29, 1988 is directed to a resin composition comprised of a block copolymer of poly(phenylene sulfide) segments and aromatic sulfide/sulfone polymer segments, poly(phenylene sulfide) and/or poly(aromatic sulfide/sulfone).

By the present invention blends of poly(arylene sulfide) resin and poly(aromatic sulfide/sulfone) resin with and without filler are provided which exhibit improved molding properties and improved mechanical strength after molding.

## Summary of the Invention

By the present invention thermoplastic resin compositions which have reduced mold cycle times and shrinkage, and which when injection molded have improved mechanical properties, are provided. Methods of preparing the compositions, methods of producing molded products from the compositions and the molded products so produced are also provided.

The thermoplastic resin compositions of the present invention are comprised of a mixture of poly-(arylene sulfide) resin and poly(aromatic sulfide/sulfone) resin. In general, the poly(arylene sulfide) resin is present in the composition in an amount in the range of from about 3% to about 95% by weight with the poly(aromatic sulfide/sulfone) resin being present therein in an amount in the range of from about 5% to about 97% by weight.

A particularly preferred thermoplastic resin composition is comprised of poly(phenylene sulfide) resin and poly(phenylene sulfide/sulfone) resin, the poly(phenylene sulfide/sulfone) resin being present in the composition in an amount in the range of from about 10% to about 30% by weight of the composition.

A glass filler, e.g., glass fibers, can optionally be included in the composition. Generally, the glass fibers are mixed with the composition in an amount in the range of from about 5% to about 55% by weight. The compositions can also include mineral fillers such as talc or calcium sulfate and other additives, pigments, processing aids and the like.

It is, therefore, a general object of the present invention to provide improved thermoplastic resin compositions and methods.

A further object of the present invention is the provision of a thermoplastic resin composition for injection molding which requires reduced mold cycle time, has less mold shrinkage, and when molded has improved mechanical properties.

Other objects, features and advantages of the present invention will be readily apparent to those skilled in the art upon a reading of the description of preferred embodiments which follows.

## Description of Preferred Embodiments

The molding compositions of this invention have improved injection moldability, i.e., shorter cycle times and less mold shrinkage, and when molded the resulting products have improved mechanical properties such as mechanical strength, impact strength, heat distortion resistance and electric insulation resistance.

The thermoplastic resin compositions of the invention are comprised of mixtures of poly(arylene sulfide) resin and poly(aromatic sulfide/sulfone) resin. In addition, the compositions can optionally contain a glass reinforcement material such as glass fibers. The compositions can additionally contain other additives such as plasticizers, pigments, etc.

The terms "arylene sulfide polymer" and "poly(arylene sulfide) resin" are used herein to broadly designate arylene sulfide polymers whether homopolymers, copolymers, terpolymers, and the like, or a blend of such polymers. Poly(arylene sulfide) resins which are suitable for use in accordance with the present invention are those described in United States Patents Nos. 3,354,129 issued Nov. 21, 1967; 3,919,177 issued Nov. 11, 1975; 4,038,261 issued July 26, 1977; and 4,656,231 issued April 7, 1987, which patents are incorporated herein by reference. Of the various poly(arylene sulfide) resins which can be utilized, poly(phenylene sulfide) resins are most preferred. The preferred commercially available poly-(phenylene sulfide) resins are those manufactured by Phillips Petroleum Company of Bartlesville, Oklahoma, and marketed as RYTON® poly(phenylene sulfide) resins having melt flows of from about 10 to about 1000 grams per 10 minutes as determined by ASTM D1238, condition 317/5.

The terms "aromatic sulfide/sulfone polymer" and "poly(aromatic sulfide/sulfone) resin" are used herein to broadly designate the aromatic sulfide/sulfone polymers described in United States Patent No. 4,016,145 issued April 5, 1977 and United States Patent No. 4,127,713 issued Nov. 28, 1978, which patents are incorporated herein by reference. The aromatic sulfide/sulfone polymers of increased molecular weight produced in accordance with the process of U.S. Patent No. 4,127,713 are preferred. Such polymers are produced by contacting at least one dihalo aromatic sulfone, at least one alkali metal sulfide, at least one organic amide, at least one sodium carboxylate, and a sufficient amount of water to produce higher molecular weight polymers than are normally produced. The most preferred such aromatic sulfide/sulfone polymer is poly(phenylene sulfide/sulfone).

Particularly preferred poly(phenylene sulfide/sulfone) resins are those manufactured by Phillips Petroleum Company and marketed as RYTON®S poly(phenylene sulfide/sulfone) resins having melt flows of from about 10 to about 350 grams per 10 minutes as determined by ASTM D1238, condition 343/5.

The thermoplastic resin compositions of the present invention are comprised of a mixture of poly-(arylene sulfide) resin and poly(aromatic sulfide/sulfone) resin wherein the poly(arylene sulfide) resin is present in an amount in the range of from about 3% to about 95% by weight and the poly(aromatic sulfide/sulfone) is present in an amount in the range of from about 5% to about 97% by weight. The terms "% by weight" or "weight %" are used herein to mean the weight percent of one component in a composition based on the total weight of all of the components in the composition.

A particularly preferred unfilled composition of the present invention is comprised of a mixture of poly-(phenylene sulfide) resin and poly(phenylene sulfide/sulfone) resin, the poly(phenylene sulfide/sulfone) resin being present in the composition in an amount in the range of from about 10% to about 30% by weight.

When a glass filler is utilized in the thermoplastic resin composition, the particular glass reinforcement material utilized can be selected from the group consisting of glass fibers, glass particles and hollow microspheric glass. The preferred glass reinforcement material is glass fibers. While there are a variety of glass fiber reinforcing materials available, those specifically developed for thermoplastic reinforcement applications are the most preferred. One such glass fiber reinforcement material is produced by Owens-Corning Corporation of Toledo, Ohio and marketed under the trade designation K-filament, Type 497 glass fibers. Other glass fibers which are suitable are those marketed and designated G-filament by Owens-Corning Corporation, an those manufactured by PPG Industries, Inc. of Pittsburgh, Pennsylvania, and marketed under the trade designation PPG 3090, K-filament. The glass reinforcement material used is generally included in a composition of this invention in an amount in the range of from about 5% to about 55% by weight.

A preferred glass filled thermoplastic resin composition of this invention is comprised of poly(phenylene sulfide) resin present in the composition in an amount in the range of from about 10% to about 25% by weight, poly(phenylene sulfide/sulfone) resin present in an amount in the range of from about about 4Q% to about 60% by weight, and glass fiber reinforcement material present in an amount of from about 20% to about 40% by weight.

As mentioned above, the compositions can include other additives including, but not limited to, pigments such as carbon black, mold corrosion inhibitors such as hydrotal cite, e.g., the hydrotalcite sold by Kyowa Chemical Co. Ltd. of Osaka, Japan under the trade designation DHT-4A, and processing aids such as high density polyethylene.

The compositions of this invention which have improved molding properties and which upon being molded result in products having improved mechanical properties are prepared by mixing poly(arylene sulfide) resin with poly(aromatic sulfide/sulfone) resin and, if used, with glass reinforcement material. Many suitable methods of mixing the components are well known to those skilled in the art. By way of example, the components can be mixed together at room temperature in a rotating drum blender, or in an intensive mixer such as a Henschel mixer, to form a homogeneous mixture of the components. The homogeneous mixture of components can be extrusion compounded at a temperature above the melting points of the resins to produce a uniform composition. The extrudate can be in the form of strands, sheets or tapes. In producing molded products having improved mechanical properties, i.e., strength, elongation, impact resistance, electrical insulation resistance, etc., a molding composition of the present invention is prepared as described above. The composition is then injection molded in a known manner to form desired products therefrom. As indicated above, the improved compositions of this invention require reduced injection molding cycle times and exhibit reduced shrinkage when molded.

The following examples are presented to further illustrate the compositions and methods of this invention. The particular species and conditions employed in the examples are intended to be illustrative of the invention and not limiting thereto.

## Example 1

This example shows the effect of various proportions of poly(arylene sulfide) and poly(arylene sulfide/sulfone) components in a molding composition on mold shrinkage and mold cycle time. Poly-(phenylene sulfide) (RYTON® produced by Phillips Petroleum Company, Bartlesville, Oklahoma, having a melt flow of 60 grams per 10 minutes measured in accordance with ASTM D1238, condition 317/5) and a poly(phenylene sulfide/sulfone) (RYTON®S produced by Phillips Petroleum Co. having a melt flow of 65 grams per 10 minutes measured in accordance with ASTM D1238, condition 343/5) were blended in three formulations. Blending was accomplished in a Davis Standard (1½ inch diameter) extruder at 640°F and 80 rpm, with a 3:1 screw and 5-hole die.

Each resin formulation shown in Table I below was molded into a number of 5 x ½ x 1/8 inch bars in an Arburg Model 221E/170R injection molding machine, with a barrel temperature of 640°F and a mold temperature of 275°F. The minimum cycle time without the occurrence of excessive sticking and/or distortion was determined for each formulation, and the average shrinkage of the bars both before and after annealing for 2 hours at 200°C was determined. The results of these tests are shown in Table I below.

4

TABLE I

| Composition | A | B | C |
|---|---|---|---|
| Poly(phenylene sulfide), weight % | 85 | 90 | 95 |
| Poly(phenylene sulfide/sulfone), weight % | 15 | 10 | 5 |
| Minimum cycle time, seconds | 22 | 30 | 45 |
| Mold shrinkage, avg. (inches/inch) | | | |
| Annealed | .01395 | .01451 | .01538 |
| Unannealed | .01099 | .01043 | .01075 |

## Example 2

In this example, the effects of various additives including the poly(phenylene sulfide/sulfone) resin described in Example 1 on mold shrinkage in the poly(phenylene sulfide) described in Example 1 are determined at various mold temperatures. Blending was accomplished using a Davis Standard extruder ($1\frac{1}{2}$ inch diameter) at 640°F and 80 rpm, with a 3:1 screw and 5 hole die. The resin-additive com positions were molded using an Arburg Model 221E/170R injection molding machine into tensile bars, flex bars, and Gardner disks. The barrel temperature of the molding machine was 600°F. The shrinkages of the bars and disks were determined after annealing for 2 hours at 200°C. The results of these tests are given in Table II below.

TABLE II

| Additive | | None | Kraton G1650 [1] | Zytel 330 [2] | Poly(phenylene sulfide/sulfone) | Panex C-Fiber[3] | PEEK[4] |
|---|---|---|---|---|---|---|---|
| Wt.%, of additive mixed with poly(phenylene sulfide) | | 0 | 5 | 15 | 15 | 3 | 3 |
| Mold Temperature | Test Specimen | Shrinkage, in inches x $10^{-3}$ per inch | | | | | |
| 100°F | Tensile bar | 134 | 87 | 4 | 2 | 36 | 62 |
| | Flex bar | 23 | 33 | 10 | 8 | 10 | 12 |
| | Disk[5] | 66 | 58 | 9.5 | 15 | 27 | 40 |
| 150°F | Tensile bar | 161 | 65 | 5 | 3 | 35 | 26 |
| | Flex bar | 16 | 23 | 10 | 7 | 10 | 10 |
| | Disk[5] | 61 | 55 | 11 | 15 | 29 | 40 |
| 175°F | Tensile bar | 130 | 51 | 6 | 4 | 30 | 51 |
| | Flex bar | 10 | 31 | 10 | 7 | 11 | 11 |
| | Disk[5] | 64 | 50 | 11 | 15 | 18 | 35 |

[1] Thermoplastic rubber marketed by Shell Chemical Co. of Houston, TX.
[2] Amorphous nylon marketed by DuPont Company of Wilmington, DE.
[3] Chopped carbon fiber marketed by Stackpole Fibers Co. of Lowell, MA.
[4] Polyetheretherketone marketed by ICI Americas, Inc. of Wilmington, DE.
[5] Average of measurements taken in flow and transverse directions.

From Table II it can be seen that the resin composition comprised of poly(phenylene sulfide) and poly-(phenylene sulfide/sulfone) resulted in the least mold shrinkage.

## Example 3

In this example the mechanical properties of glass filled compositions including the poly(phenylene sulfide) and poly(phenylene sulfide/sulfone) resins described in Example 1 are determined. The resin compositions set forth in Table III below were blended in the Davis Standard extruder described in Example 1 at 80 rpm and 630° F. Flex bars, tensile bars, and Gardner disks were prepared using the Arburg unit described in Example 1 at a barrel temperature of 600° F and a mold temperature of 275° F.

The mechanical properties of the bars and disks which were determined included melt flow, spiral flow, flexural modulus and strength, tensile strenth, elongation, impact strength and electric insulation resistance. Melt flow was measured by ASTM D1238, condition 317/5; and spiral flow was measured by injection molding into a 1/16-inch deep by 1/4-inch wide spiral cavity mold and measuring the length of travel. The Arburg 221E/170R injection molder was used with a barrel temperature of 650° F, mold temperature of 200° F, constant pressure and cycle times. Flexural strength and modulus were measured according to ASTM D-790; tensile strength and elongation were determined by ASTM D-638; Izod impact strength was measured by ASTM D-256 for both notched and unnotched specimens; and electrical insulation resistance by ASTM D-257. The results of these tests are shown in Table III below.

6

## TABLE III

### COMPOSITION

| Component, weight % | A | B | C |
|---|---|---|---|
| Poly(phenylene sulfide) | 56.3 | 50.7 | 42.3 |
| Poly(phenylene sulfide/sulfone) | 0 | 5.6 | 14.0 |
| Glass fibers[1] | 40 | 40 | 40 |
| Hydrotalcite[2] | 1.0 | 1.0 | 1.0 |
| Silane[3] | 1.0 | 1.0 | 1.0 |
| Polyethylene[4] | 1.0 | 1.0 | 1.0 |
| Pigment[5] | 0.7 | 0.7 | 0.7 |

[1] Marketed under the trade designation 394A by Owens-Corning Fiberglas.

[2] Marketed under the trade designation DHT-4A by Kyowa Chemical Co.

[3] An amine functional silane available from Kay-Fries Inc.

[4] A low density polyethylene available from Allied Chemical Corp. under the trade designation AC-6A.

[5] A carbon black pigment available from Degussa.

### MECHANICAL PROPERTIES

| | | | |
|---|---|---|---|
| Melt Flow, g/10 minutes | 49 | 42 | 31 |
| Spiral Flow, inches | 16 1/4 | 18 1/4 | 19 3/4 |
| Flexural Modulus, msi | 2.0 | 2.0 | 2.1 |
| Flexural Strength, ksi | 28.5 | 30.3 | 29.7 |
| Tensile Strength, ksi | 17.2 | 18.8 | 19.1 |
| Elongation, % | 2.5 | 2.8 | 2.9 |
| Izod Impact Strength, ft. lbs/in. | | | |
| Notched | 1.9 | 1.9 | 1.9 |
| Unnotched | 6.0 | 5.9 | 5.8 |
| Insulation Resistance, ohms | $8 \times 10^{11}$ | $9 \times 10^{12}$ | $3 \times 10^{13}$ |

## Example 4

This example demonstrates further improvements realized by the compositions of the present invention over previous compositions in terms of heat distortion resistance and hot strength, i.e., the retention of mechanical strength at elevated temperatures.

Various unfilled compositions were prepared by blending the poly(phenylene sulfide) and poly-(phenylene sulfide/sulfone) components described in Example 1 in the Davis Stan dard extruder at 650° F. The poly(phenylene sulfide/sulfone) was dried for 2 hours at 150° C prior to mixing.

Molding of the test specimens was accomplished in the Arburg unit described in Example 1 at a barrel temperature of 640° F and a 200° F mold temperature. After annealing the specimens for 4 hours at 150° C, flexural, tensile, and impact strengths were measured by the usual ASTM procedures at normal temperature and at 350° F. The heat deflection temperatures of some of the specimens were determined using ASTM D-648. The results of the tests are shown in Table IV below.

7

TABLE IV

| COMPOSITION | | | | |
|---|---|---|---|---|
| Component, Wt. % | A | B | C | D |
| poly(phenylene sulfide) | 100 | 75 | 50 | 25 |
| poly(phenylene sulfide/sulfone) | -- | 25 | 50 | 75 |
| MECHANICAL PROPERTIES | | | | |
| Flexural Modulus, msi | 0.57 | 0.56 | 0.53 | 0.50 |
| At 350°F | - | 0.01 | - | 0.03 |
| Flexural Strength, ksi | 16.50 | 16.40 | 19.30 | 22.30 |
| At 350°F | - | 3.10 | - | 9.20 |
| Tensile Strength, ksi | 11.20 | 11.70 | 12.80 | 15.90 |
| Percent Elongation | 4.70 | 5.10 | 6.20 | 9.50 |
| Izod Impact Strength, ft. lbs./in. | | | | |
| Notched | 0.50 | 0.50 | 0.50 | 0.50 |
| Unnotched | 3.90 | 3.90 | 5.10 | 5.40 |
| Heat Deflection Temp., °C | - | 134 | - | 178 |

## Example 5

Various glass fiber filled compositions were prepared and molded using the thermoplastic resins and procedure described in Example 4. Blending of the formulations was done in the Davis Standard extruder with zone temperatures in zones 1-4 of the extruder measuring 650°F, 640°F, 640°F and 640°F, respectively. The blended formulations were dried for 2 hours at 150°C before molding in the Arburg unit (barrel temperature 650°F, 275°C mold temperature), after which the molded specimens were annealed for 2 hours at 200°C. Testing was done as in Example 4, and the results are presented in Table V below.

EP 0 388 970 A2

TABLE V

| COMPOSITION | | | | |
|---|---|---|---|---|
| Component, Wt. % | A | B | C | D |
| poly(phenylene sulfide) | 69.7 | 52.3 | 17.4 | - |
| poly(phenylene sulfide/sulfone) | 0 | 17.4 | 52.3 | 69.7 |
| Glass fibers[1] | 30 | 30 | 30 | 30 |
| Polyethylene[2] | 0.3 | 0.3 | 0.3 | 0.3 |
| MECHANICAL PROPERTIES | | | | |
| Flexural Modulus, msi | 1.7 | 1.6 | 1.5 | could not mold |
| Flexural Strength, ksi | 25.4 | 23.8 | 30.1 | -- |
| Tensile Strength, ksi | 16.6 | 16.5 | 20.0 | -- |
| Percent Elongation | 1.3 | 1.3 | 1.6 | -- |
| Izod Impact Strength, ft. lbs./in. | | | | -- |
| Notched | 1.5 | 1.3 | 1.7 | -- |
| Unnotched | 4.7 | 4.3 | 8.1 | -- |
| Heat Deflection Temp., °C | 250 | - | 202 | -- |
| Tensile Deflection, mm | 4.8 | 4.4 | 5.7 | -- |

[1] Marketed under the trade designation 497DB by Owens-Corning Fiberglas.
[2] A low density polyethylene available from Allied Chemical Corp. under the trade designation AC-6A.

It can be seen from Examples 1 and 2 above that the replacement of a portion of an unfilled poly-(phenylene sulfide) resin by a poly(phenylene sulfide/sulfone) resin reduces mold cycle time and mold shrinkage. The degree of reduction may vary somewhat with the resins chosen, the relative amounts of each resin, the mold temperatures employed, and other factors. However, the use of incrementally higher percentages of poly(phenylene sulfide/sulfone) resin up to about 30% by weight of the total of the resin component in the molding composition will normally achieve the highest reduction of mold cycle time and mold shrinkage.

Example 4 indicates that unfilled poly(phenylene sulfide) molded copositions are generally also improved in heat distortion resistance and other mechanical properties at both normal and elevated temperatures when poly(phenylene sulfide/sulfone) is included. That is, increased poly(phenylene sulfide/sulfone) resin content translates into increased elongation, mechanical strength, impact strength, and heat distortion resistance, with a greater retention of mechanical strength at elevated temperatures.

As for glass-filled poly(phenylene sulfide) compositions, it can be seen from Examples 3 and 5 that when poly(phenylene sulfide/sulfone) resin is included therein the electrical insulation resistance is greatly improved without diminishing mechanical properties. Improved processability and a lessened tendency toward flashing and drooling was also shown for increasing poly(phenylene sulfide/sulfone) content in the compositions.

Thus, the present invention is well adapted to carry out the objects and attain the ends and advantages mentioned as well as those inherent therein. While substitutions for the components and changes in the steps may be made by those skilled in the art, such substitutions and changes are encompassed within the scope of the invention as defined by the appended claims.

**Claims**

1. A thermoplastic resin composition comprising a mixture of poly(arylene sulfide) resin and a poly(aromatic sulfide/sulfone) resin, said poly(aromatic sulfide/sulfone) resin being present in said composition in an amount in the range of from about 5% to about 97% by weight.

2. The composition of claim 1 wherein said poly(arylene sulfide) resin is poly(phenylene sulfide).

3. The composition of claim 1 or 2 wherein said poly(aromatic sulfide/sulfone) resin is poly(phenylene sulfide/sulfone).

9

4. The composition of one of claims 1-3 wherein said poly(phenylene sulfide) has a melt flow in the range of from about 10 to about 1000 grams per 10 minutes as determined by ASTM D1238, condition 317/5.

5. The composition of one of claims 1-4 wherein said poly(phenylene sulfide/sulfone) has a melt flow in the range of from about 10 to about 350 grams per 10 minutes as determined by ASTM D1238, condition 343/5.

6. The composition of one of claims 1-5 which is further characterized to include a glass filler selected from the group cosisting of glass fibers, glass particles and hollow microspheric glass in particular wherein said glass filler is present in said composition in an amount in the range of from about 5% to about 55% by weight, more particularly wherein said glass filler is glass fiber.

7. The composition of claim 6 wherein said glass filler is comprised of glass fibers present in said composition preferably in an amount in the range of from about 20% to about 40% by weight.

8. The composition of one of the preceding claims comprising:
   a) 5-97 parts by weight of said poly(aromatic sulfide/sulfone) resin,
   b) 95-3 parts by weight of said poly(arylene sulfide) resin,
   c) 5-55 parts by weight of a glass filler,
   d) optionally silane and/or polyethylene and/or pigment and/or hydrotalcite.

9. A method of preparing a molding composition which upon being molded results in a product having reduced mold cycle time and mold shrinkage as well as improved mechanical properties comprising mixing poly(arylene sulfide) resin and poly(aromatic sulfide/sulfone) resin to form a homogeneous mixture thereof, the materials of the mixture being as defined in one of claims 1 to 8.

10. The method of claim 9 wherein said poly(arylene sulfide) resin is poly(phenylene sulfide), and said poly(aromatic sulfide/sulfone) resin is poly(phenylene sulfide/sulfone) present in said composition in an amount in the range of from about 10% to about 30% by weight.

11. A method of preparing a molded product having improved mechanical properties comprising the steps of:

mixing poly(arylene sulfide) resin and

poly(aromatic sulfide/sulfone) resin to form a homogenous mixture thereof;

and

forming a molded product using said mixture.

12. The method of claim 11 wherein the ingredients as defined in one of the composition claims are mixed to form said homogenous mixture.

13. A molded product produced in accordance with the method of claim 11 or 12.